Europäisches Patentamt

**European Patent Office**

Office européen des brevets

(11) Numéro de publication: **0 213 365 B1**

(12) **FASCICULE DE BREVET EUROPEEN**

(45) Date de publication de fascicule du brevet: **27.05.92** (51) Int. Cl.⁵: **G02B 6/44**

(21) Numéro de dépôt: **86110047.7**

(22) Date de dépôt: **22.07.86**

(54) **Dispositif de branchement.**

(30) Priorité: **23.07.85 FR 8511249**

(43) Date de publication de la demande:
**11.03.87 Bulletin 87/11**

(45) Mention de la délivrance du brevet:
**27.05.92 Bulletin 92/22**

(84) Etats contractants désignés:
**BE CH DE FR GB IT LI NL**

(56) Documents cités:
**EP-A- 0 116 480**
**DE-A- 2 914 217**
**FR-A- 2 498 766**
**FR-A- 2 552 890**

**Catalogue "Video-communications" de la
Société Henri Pooyet (publié le 2-5-85)**

(73) Titulaire: **ALCATEL CABLE
30, rue des Chasses
F-92111 Clichy Cédex(FR)**

(72) Inventeur: **Gerriet, Yves
Chemin de l'Orme Brûlé
F-95220 Herblay(FR)**
Inventeur: **Bourdet, Guy
62, Boulevard Troussel
F-78700 Conflans Sainte Honorine(FR)**

(74) Mandataire: **Weinmiller, Jürgen et al
Lennéstrasse 9 Postfach 24
W-8133 Feldafing(DE)**

## Description

La présente invention a trait à un dispositif de branchement entre un câble d'arrivée comportant plusieurs fibres optiques et des câbles de sortie comportant chacun au moins une fibre optique, ledit dispositif comportant un coffret se composant d'un socle et d'un couvercle, ledit coffret contenant :

- une platine sur laquelle sont fixés au moins un bornier optique servant à assurer la liaison entre les fibres du câble d'arrivée et les fibres des câbles de sortie,
- un dispositif de blocage du câble d'entrée,
- un dispositif de blocage des câbles de sortie, et
- des moyens pour loger des réserves de fibres optiques du câble d'entrée et des câbles de sortie.

De tels dispositifs sont utilisés notamment comme répartiteur téléphonique pour distribuer vers chaque abonné auquel est alloué un câble de sortie les informations arrivant sur un câble d'entrée.

Un tel dispositif de branchement est représenté dans le catalogue "vidéo-communications" de la Société Henri Pouyet publié le 2 mai 1985.

Dans un tel dispositif il est nécessaire qu'il y ait des réserves de fibres optiques pour permettre l'épissurage des fibres car cette opération est effectuée avec un matériel volumineux. De plus lorsque les liaisons doivent être modifiées ou séparées l'épissurage peut avoir à être recommencé plusieurs fois en sacrifiant à chaque fois une longueur de fibre.

Dans le dispositif de branchement connu les réserves de fibres optiques sont enroulées autour d'une galette, si bien que pour un tour de fibre la réserve est faible et il faut faire plusieurs tours de fibre ce qui entraîne un foisonnement des fils et un risque d'emmêlage.

Un document de l'art connu, le document FR-A-2 498 766, décrit un coffret de raccordement destiné à loger des raccords de fibres optiques individuelles d'une extrémité d'un câble de fibres optiques à plusieurs canaux, à des fibres optiques correspondantes d'une autre extrémité d'un câble à fibres optiques à plusieurs canaux comprenant :

- un boîtier destiné à contenir indépendamment l'excès de longueur des câbles, muni d'une cloison annulaire le séparant en deux compartiments longitudinaux, dans l'un desquels débouche le premier câble, et dans l'autre le second câble ;
- une platine servant de couvercle audit boîtier, sur laquelle sont fixés des éléments de connexion optique servant à assurer la liaison entre les fibres du premier câble et les fibres du second câble, lesdits compartiments communiquant avec le dessus de cette platine par des ouvertures latérales respectives, et
- des dispositifs de bloquage du câble d'entrée et du câble de sortie.

Un autre document de l'art connu, le document EP-A-0 116 480 divulgue un boîtier de raccordement muni d'un bornier optique disposé à l'intérieur du boîtier et d'une cloison le divisant en deux compartiments servant à stocker des réserves de fibre.

Par contre le dispositif selon l'invention, diminuant le risque d'emmêlage, concerne un dispositif de branchement entre un câble d'arrivée comportant plusieurs fibres optiques et des câbles de sortie comportant chacun au moins une fibre optique, ledit dispositif comportant un coffret se composant d'un socle et d'un couvercle, ledit coffret contenant :

- une platine disposée à l'intérieur du coffret parallelement au plan dudit socle, sur laquelle sont fixés au moins un bornier optique servant à assurer la liaison entre les fibres du câble d'arrivée et les fibres des câbles de sortie,
- un dispositif de blocage du câble d'arrivée
- un dispositif de blocage des câbles de sortie, et
- des moyens pour loger des réserves de fibres optiques du câble d'arrivée et des câbles de sortie,

caractérisé en ce que lesdits moyens pour loger des reserves de fibres comportent un boîtier allongé logé dans ledit coffret, la platine constituant l'une des parois dudit boitier, ledit bornier optique etant fixé sur la face de cette platine exterieure au boitier, ledit boitier étant en outre d'une cloison s'étendant parallèlement à la surface de base du socle et le séparant en deux compartiments longitudinaux, à savoir, un premier compartiment dans lequel débouche le câble d'arrivée et un second compartiment dans lequel débouchent les câbles de sortie, ledit second compartiment étant limité par la cloison et par la platine et communiquant avec la face exterieure de la platine sur laquelle est fixée le bornier optique par une ouverture de passage des fibres, ledit premier compartiment communiquant avec cette face exterieure de la platine par un passage latéral, et lesdits compartiments comportant dans leur partie centrale un mandrin autour duquel sont lovées les réserves de fibres optique prises individuellement.

Dans le dispositif selon l'invention chaque tour de fibre peut prendre une longueur voisine du périmètre du boîtier. Il n'est donc pas nécessaire d'en faire beaucoup.

Selon un perfectionnement de l'invention le premier compartiment est limité, du côte oppose à la cloison, par une paroi comportant une fente entourant le mandrin, en liaison avec le passage latéral.

On peut ainsi enrouler facilement les fibres de câbles d'entrée autour du mandrin dans le premier compartiment.

Selon un second perfectionnement de l'invention la platine est munie d'une fente entourant le mandrin, en communication avec l'ouverture de passage de fibres.

On peut ainsi enrouler facilement les fibres des câbles de sortie autour du mandrin dans le second compartiment.

Selon un autre perfectionnement de l'invention la face exterieure de la platine est munie de duplexeurs optiques et d'un bornier optique supplémentaire servant à dédoubler le nombre des abonnés, une fibre du câble d'entrée pouvant aussi être reliée à deux fibres de sortie, les duplexeurs étant pourvus de fibres supplémentaires reliant les borniers aux duplexeurs, et ces fibres supplémentaires étant disposées dans le second compartiment et sortant par de fentes longitudinales en liaison avec la fente de la platine.

Ainsi on peut utiliser le dispositif selon l'invention lorsque le nombre de fibres des câbles de sortie est supérieur au nombre des fibres du câble d'entrée.

L'invention sera mieux comprise à l'aide de la description suivante d'un exemple de réalisation en référence aux dessins annexés dans lesquels :

- La figure 1 est une vue schématique en perspective éclatée du dispositif de branchement selon l'invention dans le cas où il est destiné à la répartition téléphonique individuelle sur cinq abonnés à partir d'un câble d'arrivée à cinq fibres optiques.
- La figure 2 représente une coupe partielle longitudinale du dispositif de la figure 1.
- La figure 3 est une vue éclatée du boîtier.
- La figure 4 est une vue de dessus du boîtier de la figure 3.
- La figure 5 est une vue latérale en coupe du boitier de la figure 3.
- Les figures 6 et 7 sont des vues latérales en coupe partielle du boîtier de la figure 3.
- La figure 8 est une vue de dessous du boîtier de la figure 3.
- La figure 9 est une vue de dessus du boîtier de la figure 3 montrant les connexions pour un sixième abonné.

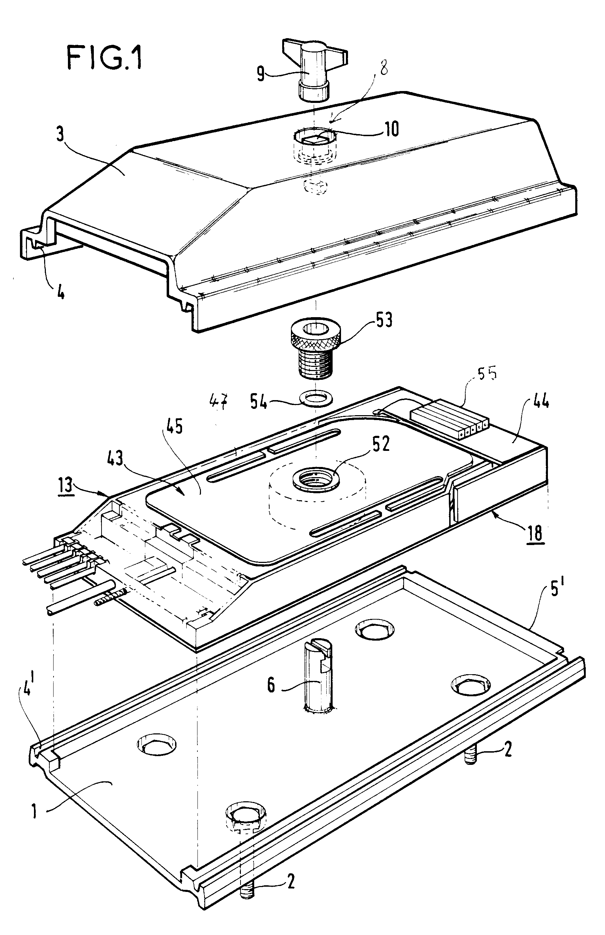

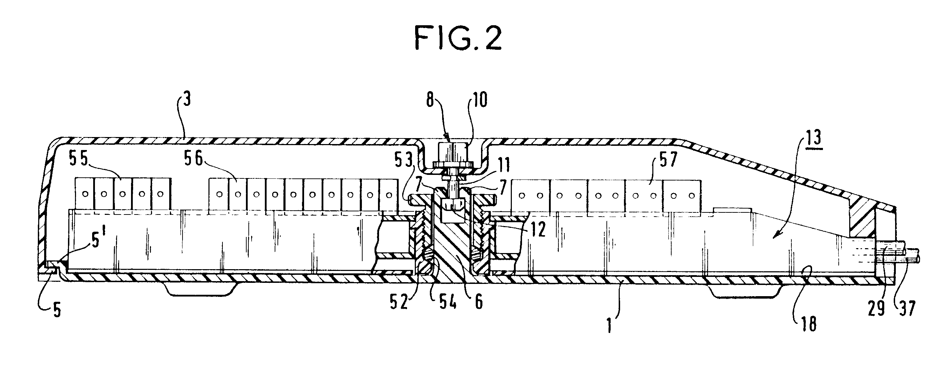

En se reportant tout d'abord aux figures 1 et 2, on voit que le dispositif de branchement selon l'invention, représenté horizontal pour plus de clarté, se présente sous la forme d'un coffret démontable dont le socle 1 est destiné à être fixé à demeure et en position verticale contre un mur d'immeuble grâce à quatre vis de fixation 2. Il est fermé par un couvercle amovible 3 qui vient s'adapter, comme on le voit sur les dessins, sur le socle 1 de manière à former un ensemble étanche au ruissellement, grâce en particulier aux rainures latérales 4 complémentaires des nervures 4' du socle et au rebord supérieur 5 coopérant avec le rebord 5' du socle.

La fixation du couvercle 3 sur le socle 1 s'effectue par un dispositif de verrouillage rapide comportant :

- une excroissance 6 du socle 1, en forme de colonne orthogonale au plan de socle 1, fendue à son extrémité supérieure de manière à y former un bec de verrouillage à deux mors 7
- un verrou 8 fixé sur le couvercle 3 et le traversant, pouvant tourner autour de son axe, orthogonal au plan du couvercle 3, lorsque l'on vient enficher une clé adaptée 9 sur sa tête carrée 10 : la tige 11 du verrou 8 se termine, comme représentée, par un embout de verrouillage 12 présentant deux épaulements dans une première direction et aucun épaulement dans la direction orthogonale à la première.

Sur la figure 2, le verrou 8 est en position de fermeture. Une rotation de 90 degrés effectuée à l'aide de la clé 9 permet de dégager l'embout 12 des mors 7, et donc de déverrouiller le couvercle 3. Le verrouillage du couvercle s'effectue bien évidemment par l'opération inverse.

Comme on le voit sur les dessins, toute la partie relative à la connectique de branchement de répartition des fibres optiques est concentrée dans un boîtier amovible 13 en matériau isolant tel que de la matière plastique semi-rigide.

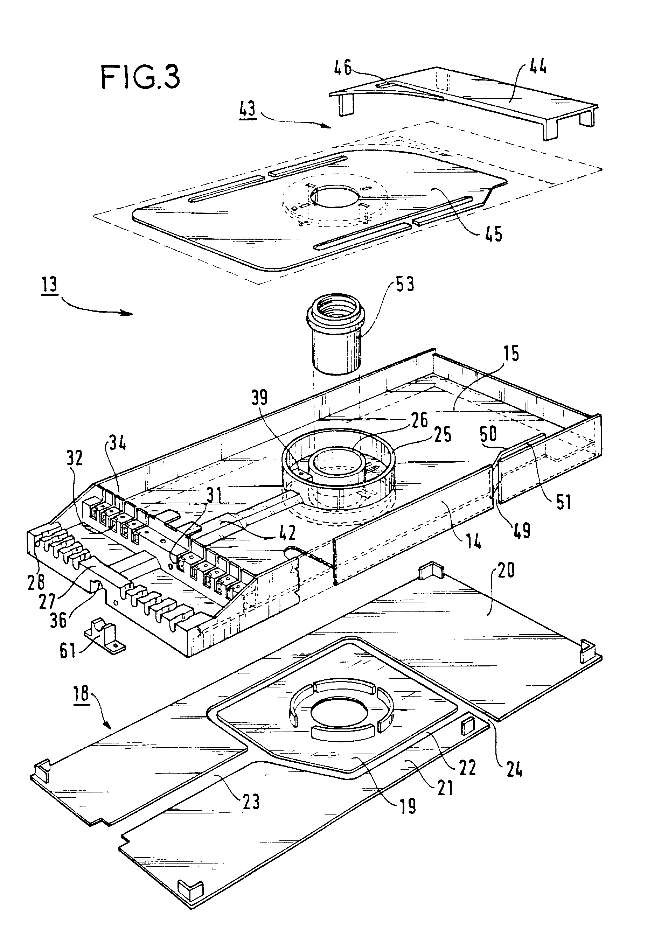

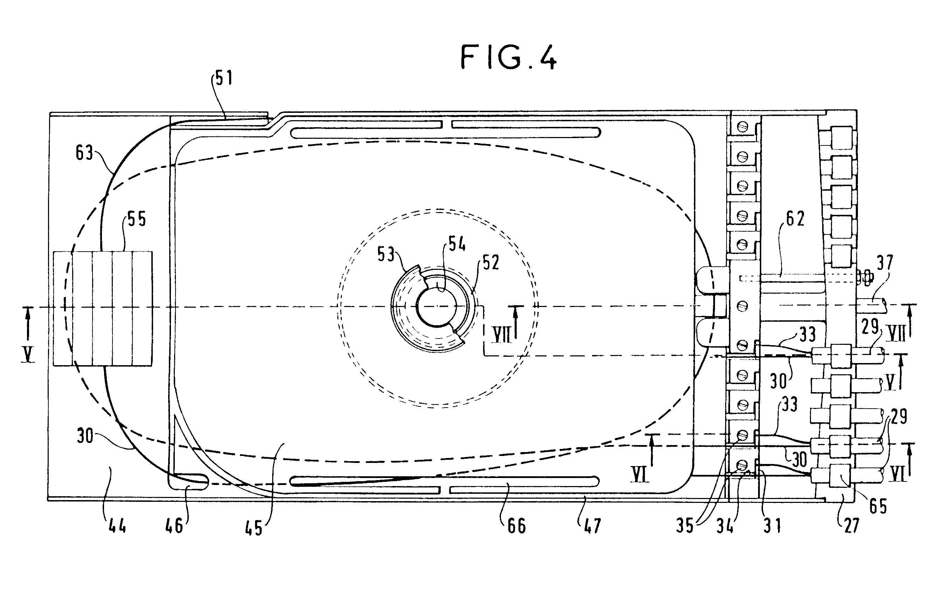

Le boîtier 13 est emprisonné à l'intérieur du coffret entre socle 1 et couvercle 3. En se reportant aux figures 3 et 4 on voit que le boîtier est muni de parois latérales 14 et d'une cloison médiane 15 le séparant en un compartiment inférieur 16 et un compartiment supérieur 17.

Le compartiment inférieur 16 est fermé en bas par un fond 18 constitué de trois parties 19, 20, 21 définissant entre elles des fentes 22, 23, 24 dont le rôle sera expliqué ultérieurement.

La partie centrale du boîtier 13 comporte un mandrin 25 d'axe vertical traversant les deux compartiments 16, 17. L'axe du mandrin est un cylindre creux 26.

A l'avant du boîtier sont prévus les éléments suivants :

- une épaisse barrette transversale 27 en matériau isolant munie de dix gorges 28 permettant de recevoir dix câbles de sorties 29 comportant chacun une fibre optique 30 (voir figure 4),
- une barrette transversale en laiton 31 percée de dix trous 32 permettant de recevoir les âmes métalliques 33 des câbles de sortie 29 et d'autre part munie de dix fentes verticales 34 à travers lesquelles on peut introduire dans le compartiment supérieur 17 les fibres optiques 30 des câbles de sortie 29.

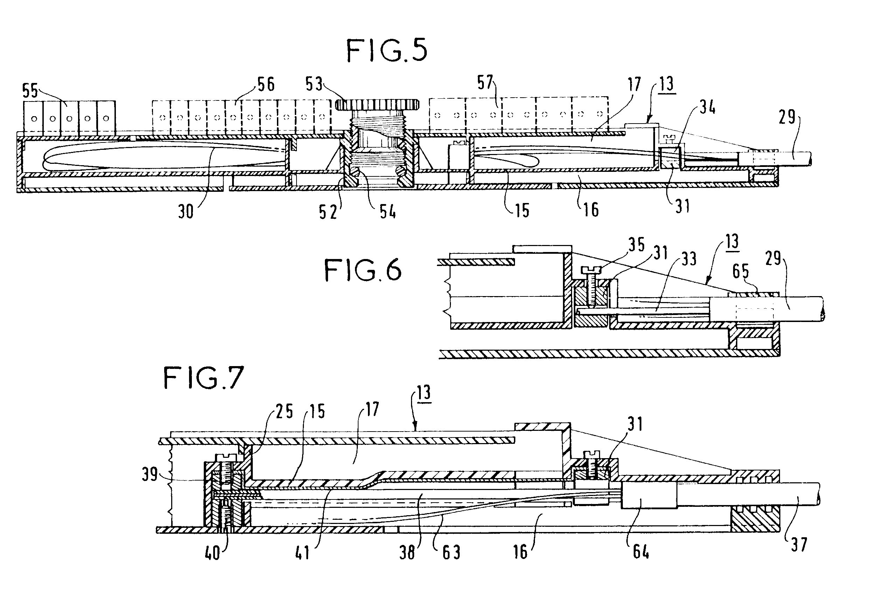

Les connexions et le maintien mécanique des âmes métalliques 33 dans la barrette en laiton 31 sont assurés par des vis-pointeau 35 et les câbles sont maintenus dans les gorges 28 par des clips 65 (voir figure 6).

L'épaisse barrette 27 est munie d'un creux 36 dans sa partie centrale du côté opposé aux gorges 28.

Dans ce creux 36 on introduit le câble d'arrivée 37 dont l'âme métallique 38 passe dans le compartiment inférieur et est fixé mécaniquement par une vis-pointeau 40 dans une prise 39 située à l'intérieur du mandrin 25 et qui est reliée par une connexion 41 en laiton à la barrette en laiton 31 (voir figure 7). La barrette en laiton 31 est reliée à une prise de terre 62 (voir figure 4). L'âme métallique 38 du câble d'arrivée 37 entre le creux 36 et l'intérieur du mandrin 25 passe dans un tunnel 42 ménagé dans la cloison 15. Dans l'exemple considéré le câble d'arrivée 37 comporte cinq fibres optiques 63.

Le compartiment supérieur 17 est fermé par une platine 43 comportant deux parties 44, 45, une partie 44 qui est collée sur le boîtier 13 et comporte une ouverture 46 de passage des fibres et une partie 45 qui est clipsée sur le mandrin 25. Lorsque la partie clipsée 45 est en place (voir figure 4) elle définit sur la face supérieure du boîtier une fente 47 faisant le tour du mandrin 25.

Cette fente 47 est en liaison avec l'ouverture 46 de la partie collée 44.

La cloison de séparation 15 du boîtier 13 est munie d'une découpe 48 le long de la paroi latérale de droite du côté opposé à l'ouverture 46 ; une fente verticale 49 est prévue dans ladite paroi latérale au niveau de cette découpe 48, ladite découpe 48 étant pourvue d'un bord vertical 50 définissant un passage 51 entre le compartiment inférieur 16 et le dessus de la platine 43.

Pour fixer le boîtier 13 sur le socle 1 on utilise un corps cylindrique creux 52 solidaire de l'axe 26 du mandrin et fileté intérieurement. On vient presser dans ce corps grâce à une vis moletée 53, un joint annulaire élastique 54 qui vient alors s'appuyer fortement contre la colonne 6 du socle 1 ce qui rend ainsi le boîtier 13 solidaire du socle 1 ; le desserrage de la vis moletée 53 permet inversement de désolidariser le boîtier 13 du socle 1 (voir figure 5).

Sur la partie 44 de la platine 43 on a fixé, par exemple par clipsage, un bornier optique 55 d'un modèle disponible dans le commerce à cinq entrées et à cinq sorties.

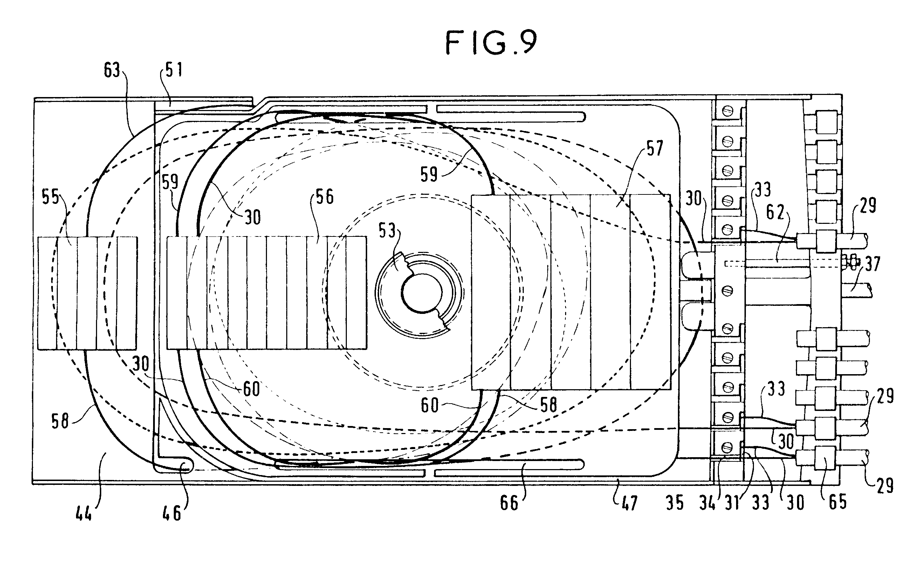

Sur la partie 45 de la platine 43 on peut fixer de manière amovible un bornier optique 56 à dix entrées et à dix sorties, ainsi que cinq coupleurs optiques ou duplexeurs 57 optiques d'un modèle courant par exemple tel que décrit dans le brevet FR-A-2 545 948, qui sont chacun muni d'une fibre optique gainée d'arrivée 58 et de deux fibres optiques gainées de sortie 59, 60 (voir figure 9).

Le raccordement du câble optique d'arrivée 37 à cinq fibres et des cinq câbles individuels 29 à une seule fibre dans le dispositif de l'invention est effectué de la façon suivante.

Le boîtier 13 est assemblé mais pas encore fixé sur le socle 1.

Le câble d'arrivée 37 est fixé dans le creux 36 de la barrette 27 par vissage d'une pièce 61 complémentaire.

Puis son extrémité est dénudée et son âme centrale 38 est solidement fixée sur la prise 39 grâce à la vis-pointeau 40 (voir figure 7) et ses cinq fibres 63 sont épanouies et gainées individuellement dans une "pieuvre" 64. Rappelons qu'une "pieuvre" pour câble optique est un dispositif, tel que par exemple décrit dans le brevet européen n° 63506, permettant de séparer et de protéger en bout de câble les fibres optiques portées par ce câble.

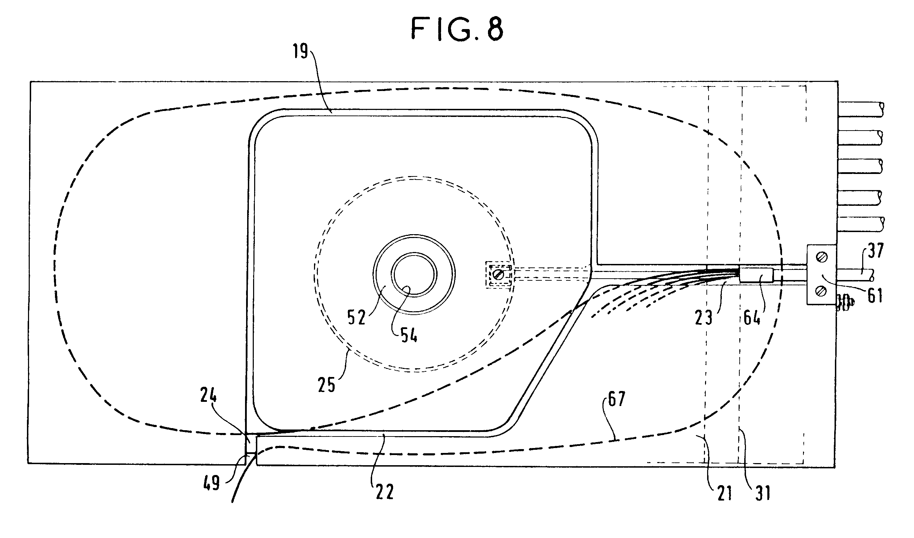

De la pieuvre 64 sortent donc cinq fibres 63 gainées sur environ 1,20 m, que l'on fait passer dans la fente 23 puis dans la fente 22 en les enroulant autour du mandrin 25 d'environ 1 tour 1/3 puis on repousse les fibres à l'intérieur du compartiment inférieur 16 de façon qu'elles glissent en se rapprochant des parois 14 de ce compartiment 16 (voir figure 8).

Ainsi la réserve de fibres avec 1 tour 1/3 sera maximale.

Les extrémités des fibres 63 sont alors passées par la fente 24 puis par le passage 51 si bien qu'elles sont prêtes pour être fixées au bornier optique 55.

A ce moment on fixe le boîtier 13 sur le socle 1 si bien que dans toutes les opérations futures on n'aura accès qu'aux extrémités des fibres 63 du câble d'entrée 37.

Le câble 37 comportant cinq fibres 63 peut desservir cinq câbles de sorties 29 ayant chacun une fibre 30.

Les cinq câbles optiques individuels 29 qui peuvent à leurs extrémités aval être raccordées chacun à l'installation individuelle d'un abonné, traversent la barrette 27 par les cinq gorges 28 situées à gauche du câble 37 sur la figure 3 en regardant ce câble 37 dans le sens de son entrée.

Chaque câble 29 est dénudé et son âme centrale métallique 33 est solidement fixée dans un trou correspondant 32 de la barrette métallique 31 par une vis-pointeau 35.

Chaque câble 29 est un câble optique standard à une seule fibre 30 dont, de manière très classique l'âme centrale métallique 33 constitue alors le fil de masse. Sa fixation dans la barrette métallique 31 fait donc également office de mise à la masse du câble.

Chaque fibre unique 30 des câbles 29 est séparée et gainée derrière la barrette 27 puis on l'enroule autour du mandrin 25 en passant par la fente 47. On fait ainsi un tour un tiers en terminant au voisinage de l'ouverture 46. On rentre ensuite le maximum de fibres 30 dans le compartiment supérieur 17 en poussant sur les extrémités des fibres 30 de façon que les fibres 30 soient au voisinage des parois 14 du compartiment supérieur 17.

On a donc les extrémités des fibres 30 des câbles de sortie 29 et les extrémités des fibres 63 du câble d'entrée 37 qui dépassent sur la partie 44 de la platine 43. On peut alors connecter ces fibres 30 et 63 aux bornes du bornier 55.

Il suffit ensuite de venir fixer le couvercle 3 sur la colonne 6 pour que le coffret soit fermé.

Le dispositif de raccordement pour câbles à fibres optiques qui vient d'être décrit permet par des moyens simples et commodes à mettre en oeuvre, d'effectuer le raccordement fibre à fibre du câble de ligne vers les abonnés, et donne la possibilité d'interventions multiples sur une fibre sans toucher aux autres, donc sans perturber le réseau alimentant les autres abonnés et sans avoir accès au câble d'entrée 37 si ce n'est aux extrémités de ses fibres. Il permet également d'effectuer rapidement sur place un changement de destination, c'est-à-dire d'aiguiller une fibre d'arrivée sur une autre fibre de départ.

Pour intervenir sur une certaine fibre gainée à l'intérieur du coffret, on la déconnecte du bornier 55, on en extrait la longueur désirée en tirant sur la fibre déconnectée, et on réalise l'intervention. Une intervention ultérieure sur la même fibre nécessitera généralement l'extraction d'une nouvelle longueur de cette fibre.

Remarquons que les risque d'emmêlage sont très faibles puisque les fibres 63 du câble d'entrée 37 sont dans le compartiment inférieur 16 tandis que les fibres 30 des câbles de sortie 29 sont dans le compartiment supérieur 17. De plus étant donné que les fibres lors de leur première installation sont au voisinage des parois 14 des compartiments 16 et 17 on peut avoir une réserve suffisante de fibres en ne leur faisant décrire qu'une seule courbe autour du mandrin 25 ce qui diminue encore les risques d'emmêlage.

La taille du mandrin 25 est choisie pour que les fibres ne puissent pas prendre une courbure qui les endommagerait.

Pour des raisons de facilité d'exploitation il a été jugé intéressant de pouvoir rajouter des abonnés supplémentaires (jusqu'à cinq) en utilisant le même dispositif de raccordement.

Pour rajouter un sixième abonné on débranche la fibre 30 d'un abonné du bornier optique 55 (voir figure 9).

Puis on prend la fibre d'entrée 58 d'un duplexeur 57 que l'on relie au bornier optique 55 à la place de la fibre 30 que l'on vient d'enlever, après lui avoir fait faire un tour autour du mandrin 25.

On relie les deux fibres de sorties 59 et 60 du duplexeur 57 à deux entrées du bornier optique 56, après leur avoir fait faire un tour autour du mandrin 25.

On relie également la fibre 30 de l'abonné qui a été détaché du bornier 55 ainsi que la fibre 30 du sixième abonné aux deux sorties correspondantes du bornier optique 56.

Bien évidemment les fibres des câbles de sortie ainsi que les fibres 58, 59, 60 du duplexeur avant d'être fixées pour la première fois sont toujours repoussées le plus possible dans le compartiment supérieur 17 pour emmagasiner le maximum de réserve de fibre en un tour.

Pour bloquer les fibres reliées au bornier 56 et au duplexeur 57 on a prévu deux fentes 66 parallèles aux parois longitudinales du boîtier.

Ces fentes 66 sont reliées à la fente 47 pour permettre de faire passer l'extrémité des fibres de l'une à l'autre.

Pour connecter le câble d'un septième abonné on procéderait de même et ainsi de suite jusqu'au dixième abonné.

**Revendications**

1. Dispositif de branchement entre un câble d'arrivée (37) comportant plusieurs fibres optiques (63) et des câbles de sortie (29) comportant chacun au moins une fibre optique (30), ledit dispositif comportant un coffret se composant d'un socle (1) et d'un couvercle (3), ledit coffret contenant :
   - une platine (43) disposée à l'intérieur du coffret parallelement au plan dudit socle (1), sur laquelle sont fixés au moins un bornier optique (55) servant à assurer la liaison entre les fibres (63) du câble d'arrivée (37) et les fibres (30) des câbles de sortie (29),
   - un dispositif de blocage du câble d'arrivée (37),
   - un dispositif de blocage des câbles de sortie (29), et
   - des moyens pour loger des réserves de fibres optiques (63, 30) du câble d'arrivée (37) et des câbles de sortie (29) ;
   caractérisé en ce que lesdits moyens pour loger des réserves de fibres comportent un boîtier (13) allongé logé dans ledit cofret, la platine (43,44) constituant l'une des parois dudit boitier, ledit bornier optique (55) étant fixé sur la face de cette platine exterieure au boitier, ledit boitier étant en outre muni d'une cloison (15) s'étendant parallèlement au plan du socle (1) et le séparant en deux compartiments longitudinaux (16, 17), savoir, un premier compartiment (16) dans lequel débouche le câble d'arrivée (37) et un second compartiment (17) dans lequel débouchent les câbles de sortie (29), ledit second compartiment (17) étant limité par la cloison (15) et par la platine (43) et communiquant avec la face exterieure de la platine (43) sur laquelle est fixée le bornier optique (55) par une ouverture (46) de passage des fibres, ledit premier compartiment (16) communiquant avec cette face exterieure de la platine (43) par un passage latéral (51) et lesdits compartiments (16, 17) comportant dans leur partie centrale un mandrin (25) autour duquel sont lovées les réserves de fibres optiques (30, 63) prises individuellement.

2. Dispositif de branchement selon la revendication 1, caractérisé, en ce que le premier compartiment (16) est limité, du côte opposé à la cloison (15), par une paroi comportant une fente (22) entourant le mandrin (25), en liaison avec le passage latéral (51).

3. Dispositif de branchement selon l'une des revendications précédentes, caractérisé en ce que la platine (43) comporte une fente (47) entourant le mandrin (25), en communication avec l'ouverture (46) de passage des fibres.

4. Dispositif de branchement selon la revendication 3, caractérisé en ce que la face exterieure de la platine est munie de duplexeurs optiques (57) et d'un bornier optique supplémentaire (56) servant à dédoubler le nombre des abonnés, une fibre (63) du câble d'entrée (37) pouvant être reliée à deux fibres (30) de sortie, les duplexeurs (57) étant pourvus de fibres supplémentaires (58, 59, 60) reliant les borniers (55, 56) aux duplexeurs (57), et ces fibres supplementaires etant disposées dans le second compartiment (17) et sortant par des fentes longitudinales (66) en liaison avec la fente (47) de la platine (43).

**Claims**

1. A connection device for connecting an incoming cable (37) including a plurality of optical fibers (63) with outgoing cables (29) each including at least one optical fiber (30), said device comprising a box constituted by a base (1) and a lid (3), said box containing
   - a plate (43) disposed inside the box parallel to the plane of said base (1), and bearing at least one optical terminal strip (55) serving to provide connections between the fibers (63) of the incoming cable (37) and the fibers (30) of the outgoing cables (29),
   - a device for clamping the incoming cable (37),
   - a device for clamping the outgoing cables (29), and
   - means for housing optical fiber reserves (63, 30) of the incoming cable (37) and of the outgoing cables (29),

   the device being characterized in that said means for housing fiber reserves comprise an elongate housing (13) received inside said box, with the plate (43, 44) constituting one of the walls of the housing, said optical terminal strip (55) being fixed to the face of said plate that is outside the housing, said housing being additionally provided with a partition (15) extending parallel to the plane of the base (1) and dividing the housing into two longitudinal compartments (16, 17), namely a first compartment (16) into which the incoming cable (37) opens out and a second compartment (17) into which the outgoing cables (29) open out, said second compartment (17) being delimited by the partition (15) and the plate (43) and communicating with the outside face of the plate (43) on which the optical terminal strip (55) is fixed by a fiber-passing opening (46), said first compartment (16) communicating with said outside face of the plate (43) via a lateral passage (51); and
   the central portion of said compartments (16, 17) including a mandrel (25) around which the optical fiber reserves (30, 63) taken individually are wound.

2. A connection device according to claim 1, characterized in that the first compartment (16) is delimited at its side furthest from the partition (15) by a wall including a slot (22) surrounding the mandrel (25) and in communication with the lateral passage.

3. A connection device according to any preceding claim, characterized in that the plate (43) includes a slot (47) surrounding the mandrel (25) and in communication with the fiber-passing opening (46).

4. A connection device according to claim 3, characterized inthat the outside face of the plate is provided with optical duplexers (57) and an additional optical terminal strip (56) for doubling the number of subscribers, a fiber (63) of the incoming cable (37) being capable of being connected to two outgoing fibers (30), the duplexers (57) being provided with additional fibers (58, 59, 60) connecting the terminal strips (55, 56) to the duplexers (57), and said additional fibers being disposed in the second compartment (17) and leaving it via longitudinal slots (66) in communication with the slot (47) of the plate (43).

## Patentansprüche

1. Verbindungsvorrichtung zwischen einem ankommenden, mehrere Lichtleitfasern (63) enthaltenden Kabel (37) und Ausgangskabeln (29), die je mindestens eine Lichtleitfaser (30) enthalten, wobei die Vorrichtung ein Gehäuse bestehend aus einem Sockel (1) und einem Deckel (3) besitzt, das enthält:
   - eine Platte (43), die im Inneren des Gehäuses parallel zur Ebene des Sockels (1) angeordnet ist und auf der mindestens ein optischer Anschlußblock (55) angeordnet ist, der die Verbindung zwischen den Fasern (63) des ankommenden Kabels (37) und den Fasern (30) der Ausgangskabel (29) herstellen soll,
   - eine Blockiervorrichtung für das ankommende Kabel (37),
   - eine Blockiervorrichtung für die Ausgangskabel (29),
   - und Mittel zum Unterbringen von Überlängen der Lichtleitfasern (63, 30) des ankommenden Kabels (37) und der Ausgangskabel (29), dadurch gekennzeichnet, daß die Mittel zum Unterbringen von Faserüberlängen einen länglichen Kasten (13) aufweisen, der im Gehäuse sitzt, wobei die Platte (43, 44) eine der Wände des Kastens bildet und der optische Anschlußklemmenblock (55) auf der nach der Kastenaußenseite gerichteten Seite der Platte befestigt ist, wobei der Kasten außerdem eine Trennwand (15) besitzt, die sich parallel zur Ebene des Sockels erstreckt und den Kasten in zwei Längsabteile (16, 17) aufteilt, nämlich ein erstes Abteil (16), in das das ankommende Kabel (37) mündet, und ein zweites Abteil (17), von dem die Ausgangskabel (29) ausgehen und das von der Trennwand (15) und der Platte (43) umgrenzt wird und mit der Außenseite der Platte (43), auf der der Klemmenblock (55) befestigt ist, über eine Öffnung (46) zum Durchlaß der Fasern in Verbindung steht, während das erste Abteil (16) mit dieser Außenseite der Platte (43) über einen seitlichen Durchlaß (51) in Verbindung steht, und wobei die beiden Abteile (16, 17) in ihrem zentralen Bereich einen Wickelkern (25) aufweisen, um den herum die Überlängen der Lichtleitfasern (30, 63) einzeln aufgeschossen sind.

2. Verbindungsvorrichtung nach Anspruch 1, dadurch gekennzeichnet, daß das erste Abteil (16) auf der der Trennwand (15) entgegengesetzten Seite durch eine Wand begrenzt wird, die einen um den Wickelkern (25) herumlaufenden Schlitz (22) aufweist, der mit dem seitlichen Durchlaß (51) in Verbindung steht.

3. Verbindungsvorrichtung nach einem der vorhergehenden Ansprüche, dadurch gekennzeichnet, daß die Platte (43) einen um den Wickelkern (25) herumführenden Schlitz (47) aufweist, der mit der Öffnung (46) für den Durchlaß der Fasern in Verbindung steht.

4. Verbindungsvorrichtung nach Anspruch 3, dadurch gekennzeichnet, daß die Außenseite der Platte optische Duplexer (57) und einen zusätzlichen Lichtleiterklemmenblock (56) trägt, mit denen die Anzahl der Teilnehmer verdoppelt werden kann, wobei eine Faser (63) des Eingangskabels (37) an zwei Ausgangsfasern (30) angeschlossen werden kann und die Duplexer (57) zusätzliche Lichtleitfasern (58, 59, 60) aufweisen, mit denen die Klemmenblöcke (55, 56) an die Duplexer (57) angeschlossen sind, und wobei diese zusätzlichen Lichtleitfasern im zweiten Abteil (17) liegen und durch Längsschlitze (66) austreten, die mit dem Schlitz (47) der Platte (43) in Verbindung stehen.

# FIG.1

FIG.2

# FIG.3

# FIG.4

EP 0 213 365 B1

# FIG.5

55  56  53  57  17  13  34  29

30  52  54  15  16  31

# FIG.6

35  31  33  13  29
65

# FIG.7

25  15  17  13  31

39

40  41  38  63  16  64  37

EP 0 213 365 B1

# FIG. 8

EP 0 213 365 B1

FIG.9